# EUROPEAN PATENT SPECIFICATION

(11) **EP 2 633 217 B1**
(45) Date of publication and mention of the grant of the patent: **11.05.2016**
(21) Application number: 11801822.5
(22) Date of filing: 25.10.2011
(51) Int. Cl.: F16L 13/11

(54) **METHOD AND DEVICE FOR CONNECTION OF TWO PIPE ELEMENTS FOR FLUID TRANSPORT**
VERFAHREN UND VORRICHTUNG ZUR VERBINDUNG ZWEIER ROHRSTÜCKE FÜR EINEN FLÜSSIGKEITSTRANSPORT
PROCÉDÉ ET DISPOSITIF POUR LE RACCORD DE DEUX ÉLÉMENTS TUYAUX POUR LE TRANSPORT DE FLUIDE

(30) Priority: 25.10.2010 FR 1058735
(43) Date of publication of application: 04.09.2013
(73) Proprietor: Raccords et Plastiques Nicoll, 49300 Cholet (FR)
(72) Inventor: LECOINTE, Nicolas, F-44400 Reze (FR); MAUDET, Michel, F-49280 La Tessoualle (FR)
(74) Representative: Sonnenberg, Fred
(86) International application number: PCT/IB2011/002705
(87) International publication number: WO 2012/056315

(56) References cited:
- CH-A5- 661 109
- DE-A1- 1 475 700
- GB-A- 505 009
- GB-A- 191 123 205
- US-A1- 2005 212 297

## Description

The present invention concerns a method and a device for connection of two pipe elements for the transport of liquid or gaseous fluid, one of the elements having at one end a socket with inner diameter greater than the outer diameter of said element, in which socket is inserted the end of the other pipe element.

Document WO 2005-043 021 describes a structure for connection of two pipes, one of which has an end socket of inner diameter larger than the outer diameter of the pipes. Into the end socket of one of the pipes is inserted the end of the other pipe. A gasket is placed between the socket and the other pipe. An adhesive is injected into the annular space between the socket and the other pipe, and bounded by the gasket. This arrangement is seldom satisfactory because, in general, the adhesive is not distributed uniformly in the annular space. If the injection pressure is increased in an attempt to fill the annular space, there is a great risk of the gasket being ejected, or of the excess adhesive flowing into the pipe at the end of the pipe.

Document GB 23 205 discloses a connection device according to the preamble of claim 1.

One purpose of the invention is to propose a device for connection of two pipe elements, one of which has an enlarged socket to receive the end of the other element, and which does not have the aforementioned drawbacks.

Another purpose of the invention is to propose a method of connection of two pipe elements by means of an injected assembly fluid, ensuring a good distribution of the assembly fluid.

The present disclosure describes a device for connection, by means of an injected assembly fluid, of a first and a second pipe element for transport of liquid or gaseous fluid, the second element having a socket receiving an end of the first element, comprising a diffusion part for diffusion of the injected assembly fluid, the diffusion part being adapted to be arranged on a circumference of the first element and against an edge of the socket, said diffusion part having at least one opening for the injection of assembly fluid into said diffusion part. The diffusion part forms a chamber for collecting said assembly fluid and for distributing it circumferentially. The device comprises directing means allowing to actively direct the assembly fluid towards a connection space between the socket and the first element.

In one aspect of the disclosure, the directing means comprises a tilted and/or curved deflector surface adapted to introduce an axial speed vector in the circumferentially flowing assembly fluid.

The diffusion part forms a circumferential channel and the directing means comprising at least one secondary diffusion channel, the circumferential channel distributing the assembly fluid into the at least one secondary diffusion channel.

Advantageously the circumferential channel is wider than the at least one secondary diffusion channel. Such a configuration allows the circumferential channel to be filled with assembly fluid first, and then the diffusion of the assembly fluid into the at least one secondary diffusion channel and into the connection space.

In yet another aspect of the disclosure, the diffusion part being mainly U shaped with an inner wing, a radial body and an outer wing, the diffusion part being adapted to be placed on the pipe with the inner wing lying against the first element, and wherein the circumferential channel is formed between the inner wing, the radial body and the outer wing.

The inner wing may comprise one of an inner surface adapted to receive the socket and an end face adapted to abut against the socket.

The at least one secondary channel provides for axial displacement of the assembly fluid. The at least one secondary channel extends at least partially axially between said circumferential channel and said connection space, or provide a section that extends at least partly axially and circumferentially or inclined with respect to the axial direction, similar for example to a circumferential thread. A length of the at least one secondary channel may mainly correspond to a length of the inner wing. Alternately, a length of the at least one axial channel may be smaller as a length of the inner wing.

In one aspect of the disclosure, the at least one secondary diffusion channel is at least partly oriented in the radial direction.

In one embodiment, the at least one secondary diffusion channel is located on the inner wing of the diffusion part.

In another embodiment, the device comprises the socket, and the at least one secondary diffusion channel is located on the inner wing of the diffusion part.

According to one aspect of the disclosure, the inner wing is shorter than the outer wing, and the socket is adapted to abut against the end face facing the socket of the inner wing.

In yet another aspect of the disclosure, the device comprises a reservoir of assembly fluid to be injected into the connection space between the end of the first pipe element and the socket of the second pipe element.

According to one embodiment, the diffusion part for diffusion of the assembly fluid has one preferential circulation channel for the assembly fluid.

Between the channel and the space between the first pipe element and the socket of the second pipe element, the diffusion part for diffusion of the assembly fluid has at least one axial channel for diffusion of the assembly fluid.

Advantageously, the diffusion part for diffusion of assembly fluid is comprised of an open ring.

Preferably, the diffusion part for diffusion of assembly fluid comprises axial channels of variable geometry and distribution around the diffusion part depending on the position of said channels relative to the opening.

Advantageously, the socket receiving the end of the first element is of conical shape.

According to one particular embodiment, the diffusion part for diffusion of assembly fluid is comprised of two parts.

The diffusion part can be integrally formed with the socket of the second pipe element.

The invention also deals with a method of connection, by means of an injected assembly fluid, of a first and a second pipe element for transport of liquid or gaseous fluid, the second element comprising a socket, comprising the steps of:
a. assembling a diffusion part for diffusion of assembly fluid, the first pipe element and the second pipe element, such that, when assembled, the diffusion part lays around the first element and on the edge of the socket of the second pipe element, the first element being inserted into the socket;
b.injecting the assembly fluid into the diffusion part, so as to ensure the distribution of the assembly fluid in the diffusion part around the first pipe element,
c. pressurizing the injected assembly fluid,
d.curing the assembly fluid,
Wherein at least one among steps c and d comprises actively directing the assembly fluid towards a connection space between the socket and the first element.

The step of actively directing the assembly fluid towards a connection space between the socket and the first element comprises the step of filling a circumferential channel formed within the diffusion part with the assembly fluid and distributing the assembly fluid from the circumferential channel into at least one secondary diffusion channel extending at least partially axially between said circumferential channel and said connection space.

Preferably, after producing the connection, the diffusion part for diffusion of assembly fluid is removed.

The invention is described hereinafter with reference to the enclosed drawings, where one can see:
Fig. 1, an exploded view in axial section of one sample embodiment of the elements of a pipe connection according to the invention, applied to a pipe;
Fig. 2, an axial section view of the elements of Fig. 1 after being connected;
Fig. 3, an enlarged cross section view to the right of the diffusion part for diffusion of assembly fluid, from a detail of Fig. 2;
Fig. 4, a view in a radial plane of a second embodiment of the diffusion part for diffusion of assembly fluid;
Fig. 5, a view in a radial plane of a third embodiment of the diffusion part for diffusion of assembly fluid;
Fig. 6, a view of a sample embodiment of an assembly fluid reservoir;
Fig. 7, an exploded perspective view of another sample embodiment of the elements of a pipe connection according to the invention;
Fig. 8, a view in partial axial section of the sample embodiment of Fig. 7;
Fig. 9, a partial sectional view of the sample embodiment of Fig. 8 after being assembled;
Fig. 10, an exploded perspective view of another sample embodiment of the elements of a pipe connection according to the invention, applied to a gutter;
Fig. 11, a perspective view of the sample embodiment of Fig. 10 after being assembled;
Fig. 12, an exploded view of another embodiment of the elements of a pipe connection according to one aspect of the present invention;
Fig. 13, an enlarged cross section view to the right of the diffusion part for diffusion of assembly fluid of Figure 12, when connected;
Fig. 14, another exploded view of an embodiment of the elements of a pipe connection according to another aspect of the present invention;
Fig. 15, yet another exploded view of an embodiment of the elements of a pipe connection according to another aspect of the present invention;
Fig. 16, yet another exploded view of an embodiment of the elements of a pipe connection according to another aspect of the present invention;
Fig. 17, yet another view of an embodiment of the elements of a pipe connection according to another aspect of the present invention;
Fig. 18, a method of connection of pipe elements according to one aspect of the present invention.

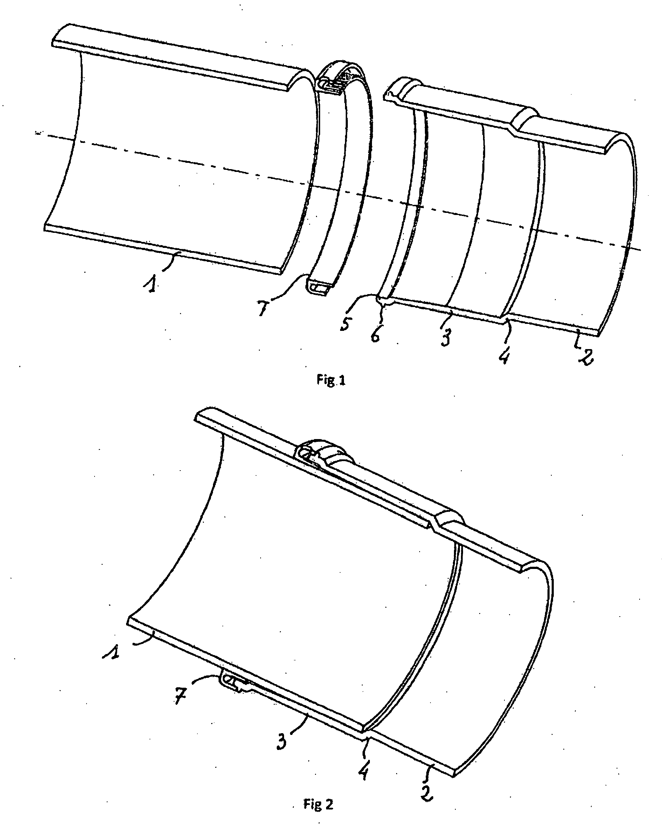

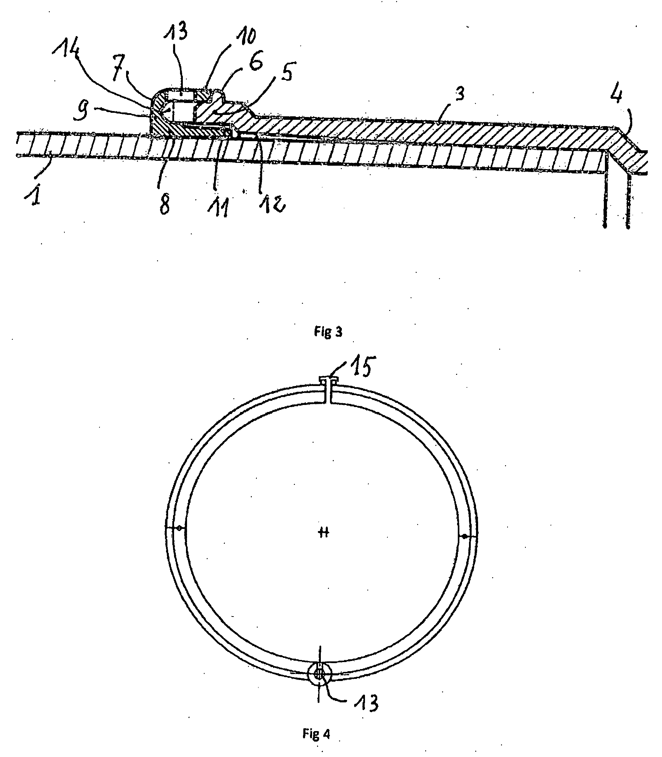

In figures 1 to 9, the first pipe element 1 has a cylindrical end. The second pipe element 2 is cylindrical, but it has at its end a socket 3, preferably a truncated cone, to which it is attached by a collar 4. The socket has a free edge 5 on which it is possible to provide radial limit stops, such as 6 in Fig. 3.

The diffusion part 7 for diffusion of assembly fluid is generally of annular shape. In cross section along a plane passing through the axis of the pipe (Fig. 3), it is preferably of inverted U shape, with an inner wing 8, a radial body 9 and an outer wing 10. The inner wing 8 is intended to be braced against the first pipe element 1. Its upper surface has one or more axial channels 11 open on the one hand toward the interior of the U for their entire length, on the other hand at their end, toward the space 12 between the first pipe element 1 and the socket 3.

The outer wing 10 is provided with one or more openings 13 intended for the injection of assembly fluid. When the diffusion part 7 is put in place on the edge 5 of the socket 3, the edge 5 is inserted between the inner 8 and outer 10 wings. The limit stops 6, if present, are braced against the edge of the outer wing 10. In this arrangement, between the edge 5 of the socket 3, the body 9 and the inner 8 and outer 10 wings there is defined a circumferential channel 14 for preferential circulation of assembly fluid. This circumferential channel 14 communicates with the axial channels 11 of the inner wing 8. The axial secondary channels 11 form directing means, adapted to direct the assembly fluid distributed from the circumferential channel towards the connection space 12 between the socket 3 and the first element end.

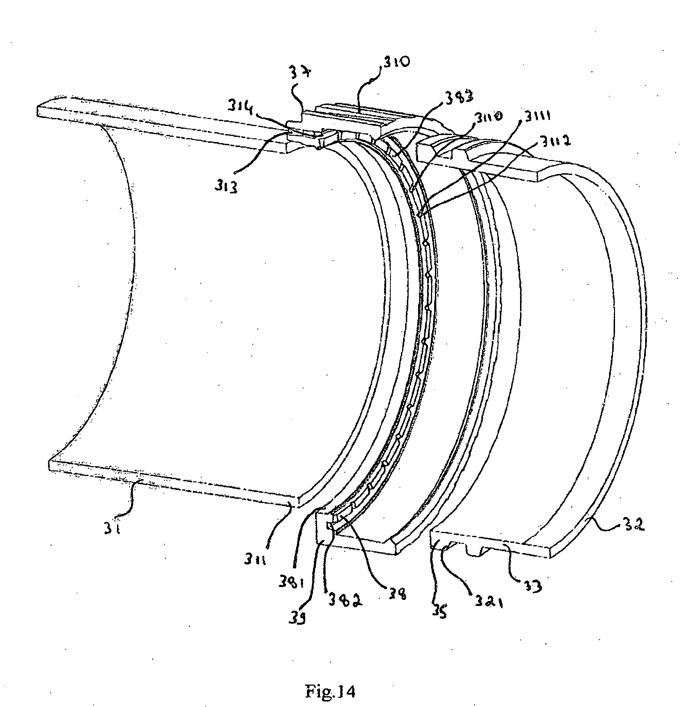

The secondary channels 11 of figures 1 to 9 are mainly axial. Alternately, the secondary channels can also be radial, as will be described later in reference to figure 14.

In the described embodiment, the pipe elements 1 and 2 and diffusion part 7 for diffusion of assembly fluid made of synthetic or other material are preferably in the shape of a cylinder of revolution, but they can be cylindrical with polygonal cross section or ellipsoidal, for example.

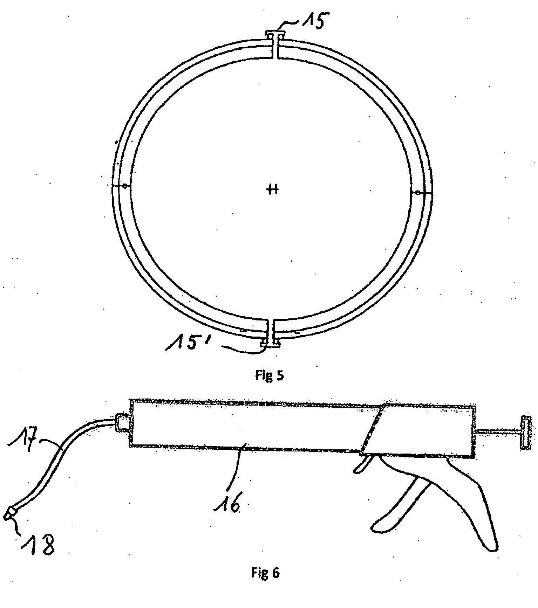

According to a first embodiment, the diffusion part 7 is a solid of revolution, as in figures 1 to 3. To allow a certain freedom of adaptation to the edge 5 of the socket 3, according to a second embodiment it can be an open ring, as in Fig. 4, and carry an assembly clip 15 for the two ends of the open ring. To allow a great freedom of adaptation to the edge 5 of the socket 3, according to a third embodiment it can be in two parts, as in Fig. 5. In this case, each of the two parts 7, 7' can have it own opening for injection of assembly fluid 13, 13' (not shown) and one assembly clip 15, 15'.

In Fig. 6, the reservoir of assembly fluid 16 is present in the form of a cartridge, a can, a pouch, refillable or not, or a pressurized dispensing device, for example. It can have a flexible connection tube 17 provided with a feed nozzle 18, able to cooperate with the opening 13 of the diffusion part 7 to ensure the feeding of assembly fluid to the circumferential channel 14. As a variant, the opening 13 of the diffusion part 7 can be arranged to cooperate directly with the flexible 17.

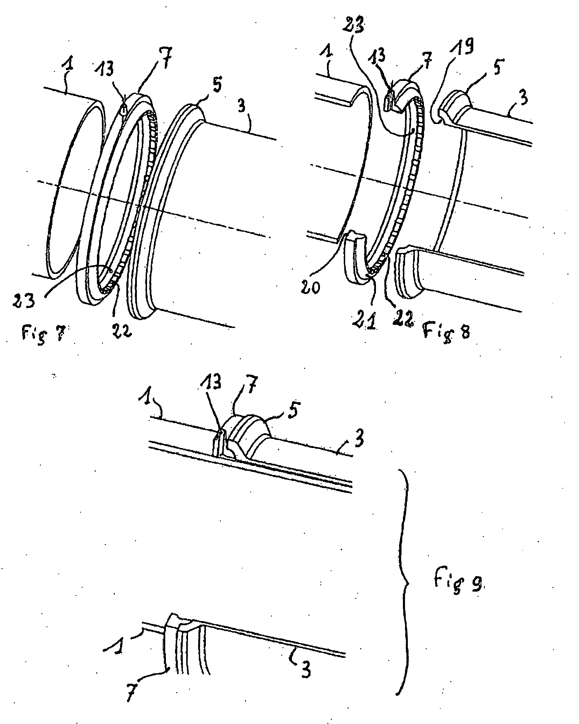

In Fig. 7, the diffusion part 7 is intended to be inserted partially in the edge 5 of the socket 3, by form fitting. For this, the edge 5 of the socket 3 has an annular throat 19, whose cross section through an axial plane basically has the shape of a quadrant of a circle. The diffusion part 7 for diffusion of assembly fluid has, on one side, a radial flank 20 intended to be applied, by its inner edge, against the pipe element 1 and, on the other side, an annular shoulder 21, whose cross section through an axial plane basically has the shape of a quadrant of a circle. This shoulder 21 is intended to be applied in the throat 19 of the edge 5 of the socket 3 (Fig. 9). The inner surface of the shoulder 21 has axial channels 22 enabling the flow of assembly fluid between a circumferential channel 23, housed in the diffusion part 7, and the space between the first pipe element 1 and the socket 3 of the second pipe element 2.

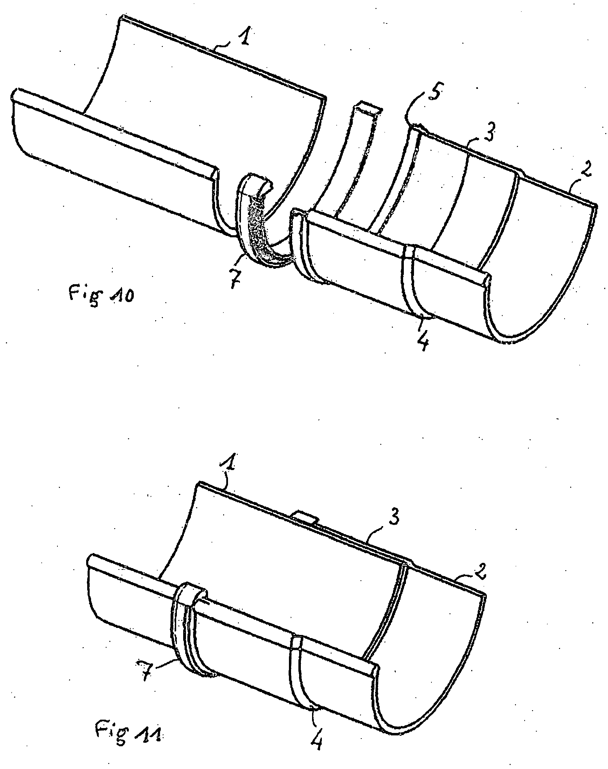

In Fig. 10 and 11, the pipe is a gutter, and not a pipe. The elements of Fig. 1 to 3, and 7 to 9, respectively, are used in a half-cylinder configuration.

The method of connection, by means of an injected assembly fluid, of two pipe elements for transport of fluid is implemented as follows in the case of figures 1 to 3, and it can be transferred to the case of figures 7 to 11.

First of all, the diffusion part 7 is put in place on the edge 5 of the socket 3, being braced against the limit stops 6, if necessary. Next, the set of the socket 3 and the diffusion part 7 is inserted onto the end of the first pipe element 1, or instead the end of the first pipe element 1 is inserted into the set formed by the socket 3 and the diffusion part 7 until the end of the first pipe element 1 makes contact with the collar 4. The reservoir 16 of assembly fluid is then connected, by its nozzle 18, to the opening 13 of the diffusion part 7 for diffusion of assembly fluid. The assembly fluid is then injected into the diffusion part 7, and it is distributed at first into the channel 14, around the pipe. When the channel 14 has been filled, the assembly fluid goes into the axial channels 11 and arrives at the space 12 between the first pipe element 1 and the socket 3.

As a variant, when the diffusion part 7 is composed of two complementary and separable parts, the pipe element 1 is inserted into the socket 3 until the end of the first pipe element 1 makes contact with the collar 4. The diffusion part 7 is put in place around the pipe element 1 by assembling its 2 separable parts. The diffusion part 7 is then slid along the pipe element 1 toward the socket 3 until the outer wing 10 makes contact with the limit stops 6 if necessary.

Since the secondary channel(s) 11 are basically more narrow than the circumferential channel 14, they only transmit the assembly fluid when the circumferential channel 14 is full, and the injection of assembly fluid to the space 12 occurs axially, which ensures a uniform injection and a good quality of injection.

As a variant, the secondary channels 11 can have a variable shape and distribution about the diffusion part 7 in order to distribute homogeneously the injected fluid by making up or increasing the head losses of the injected fluid.

The quantity of assembly fluid injected can be controlled by volumetric dispensing, for example, by means of the reservoir 16. The assembly fluid injected is an assembly and/or sealing product, preserved in liquid form in the reservoir 16, and it can change its state to become pastelike or solid under the action of air or a reagent.

The truncated cone shape of the socket 3 enables an adaptable play between the pipe element 1 and the socket 3 to allow an injection of assembly fluid with a progressive increasing of the injection pressure and a homogeneous distribution of assembly fluid by dynamic equilibration of the axial advancing front of assembly fluid.

In the case when the diffusion part for diffusion of assembly fluid is in two parts, it can be removed after producing the connection for a possible reuse.

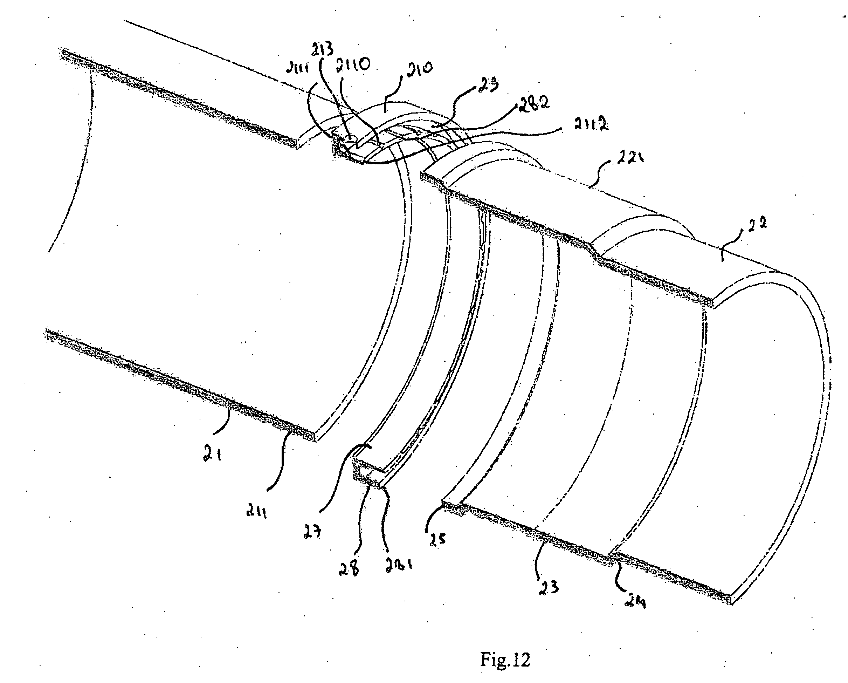

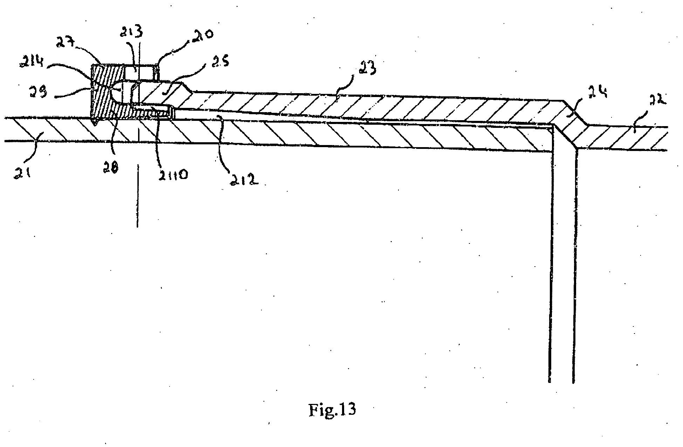

Figures 12 and 13 show another pipe connection according to yet another embodiment of the present invention.

The pipe connection comprises a first pipe element 21 adapted to be inserted into a second pipe element 22. The first pipe element 21 has a first connection end 211. The second pipe element 22 has a second connection end 221, which is of similar shape as the first connection end 211. Preferably, the first and second connection ends 211, 221 are cylindrical. Of course, this is not limiting and other forms are possible , such as circular, polygon shaped.

The second connection end 221 has a socket 23, attached to the second pipe element by a collar 24. The second pipe element 22 and the second connection end 221 can be integrally formed as a one-diffusion part unitary member. Alternately, the second pipe element 22 and the second connection end 221 can be two distinct elements connected together, e.g.by gluing, welding, clipping or any other connection means.

The socket 23 has a free edge 25. The length of the socket 23 mainly corresponds to the insertion length of the first pipe element 21 into the second pipe element 22. The length of insertion of the first pipe element 21 into the second pipe element 22 may be defined by the length of the socket 23.

Due to the truncated shape of the socket 23, a space 212, referred to as the connection space, is formed between the socket 23 and the outer surface of the first pipe element 21 inserted into the second pipe element. The space 212 is adapted to receive assembly fluid for the firm connection of the two pipe elements 21, 22.

A diffusion part 27 for diffusion of assembly fluid is provided. The diffusion part 27 is generally of annular shape, corresponding to the cylindrical outer shape of the first and second connection ends 211, 221. Of course, this is not limiting and other forms are possible, to conform to the first and second connection ends 211, 221.

The diffusion part 27 is preferably of inverted U shape in cross section, and adapted to be placed on the pipe with the U shape in cross section along a plane passing through the main axis of the pipe. The diffusion part 27 comprises an inner wing 28, a radial body 29 and an outer wing 210. As shown on figure 12, the length of the inner and outer wings are mainly identical. Alternately, the inner wing and the outer wing can have varying lengths.

The inner wing 28 is adapted to be braced against the first pipe element 21 inserted into the second pipe element 22. More precisely, the inner wing 28 has an outer surface 281 in contact with the first pipe element 21, and an inner surface 282 for receiving the free edge 25 of the socket 23.

The inner surface 282 comprises a plurality of secondary channels 2110 (, serving for the axial deflection of the assembly fluid. As shown on figure 12, the secondary channels 2110 are axial and extend between a first channel end 2111 on the radial body side and a second channel end 2112 on the socket side. The inner surface 282 may be fully or partly inclined or curved towards the connection space, adapted to introduce an axial speed to the assembly fluid and to direct the assembly fluid axially towards said connecting space.

The length of the secondary channels can correspond to the length of the inner surface 282of the inner wing, or can have a length shorter than the inner wing 28. The secondary channels 2110 are aimed at deflecting the assembly fluid in the axial direction, to allow the transmission of the assembly fluid into the connection space 12 between the socket and the first tube element.

As will be explained later, the secondary channels 2110 are necessary for a uniform diffusion of the assembly fluid during injection.

The free edge 25 of the second pipe element 22 is adapted to be inserted in the diffusion part 27, between the inner surface 282 of the inner wing 28 and the outer wing 210 when the diffusion part 27 for diffusion of assembly fluid is in place.

The diffusion part 27 comprises one or more openings 213 for the injection of assembly fluid. As seen on figure 10, the one or more openings 213 can be located on the outer wing 210. Of course, the one or more openings 213 could be located anywhere on the diffusion part 27, e.g. injection through the radial body 29 is also possible.

Between the free edge 25 of the socket 23, the radial body 29, the inner wing 28 and the outer wing 10, a circumferential channel 214 is defined.

The circumferential channel 214 defines a space, which can be filled with assembly fluid injected into said diffusion part 27. This circumferential channel 24 communicates with the one or more secondary channels 2110 formed in the inner surface 282 of the inner wing 28. The circumferential channel 214 is adapted to act as a fluid collector or intermediary chamber for the diffusion of the assembly fluid in the different axial channels 2110.

Preferably, the circumferential channel 214 is wider than the secondary channels 2110, allowing the circumferential channel 214 to be filled with assembly fluid first, and then the diffusion of the assembly fluid in the axial channels 2110 and into the connection space 212.

The reservoir of assembly fluid 16 as shown on figure 6 can be used to inject the assembly fluid. The reservoir 16 has a flexible connection tube 17 provided with a feed nozzle 18, able to cooperate with the opening 213 of the diffusion part 27 to ensure the feeding of assembly fluid to the circumferential channel 214. As a variant, the opening 13 of the diffusion part 27 can be arranged to cooperate directly with the flexible connection tube 17.

The man skilled in the art will readily understand that the axial channels 11, 2110 are preferably uniformly spaced apart circumferentially around the inner surface of the inner wing 8, 28, to allow a uniform repartition (distribution) of the injected fluid.

Figures 1 and 12 show different spacings between the secondary diffusion channels 11, 2110. The man skilled in the art will also understand that, even if the diffusion channels 11, 2110 shown on the figures are substantially straight, any shape or geometry can be contemplated for the secondary channels.

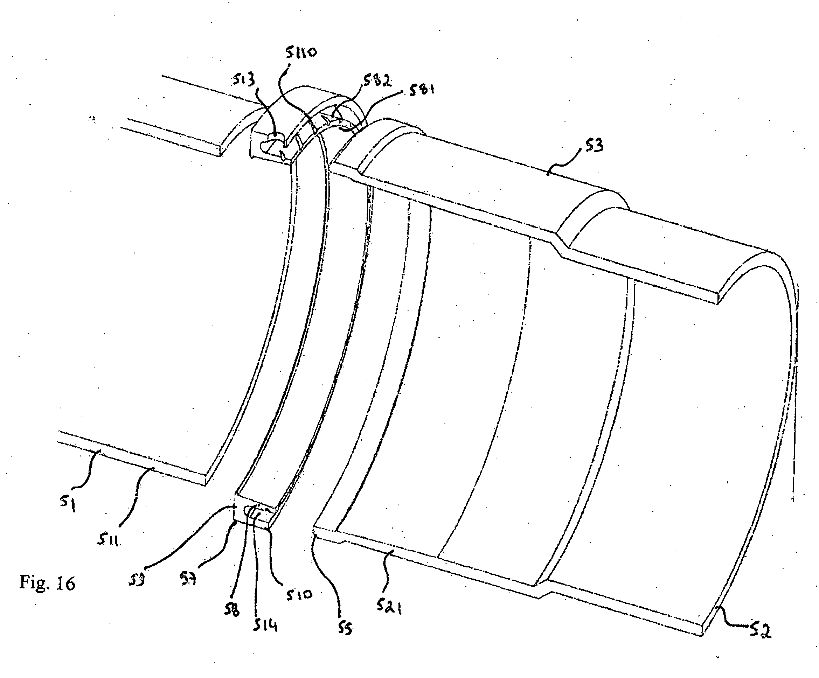

Further, the secondary diffusion channels 11, 2110 are axial diffusion channels. In another embodiment of the present disclosure as shown on figure 14, the secondary diffusion channels are radial channels. The secondary channel may also be inclined with respect to the axial direction and/or radial direction, or similar to a partial circumferential thread, as shown on figure 16.

Figure 14 shows elements of a pipe connection according to the present disclosure. The pipe connection comprises a first pipe element 31 adapted to be inserted into a second pipe element 32. The first pipe element 31 has a first connection end 311. The second pipe element 32 has a second connection end 321. Preferably, the first and second connection ends 311, 321 are cylindrical. Of course, this is not limiting and other forms are contemplated, such as circular, polygon shaped.

The second connection end 321 has a socket 33. The second pipe element 32 and the second connection end 321 can be integrally formed as a one-diffusion part unitary member. Alternately, the second pipe element 32 and the second connection end 321 can be two distinct elements connected together, e.g.by gluing, welding, clipping or any other connection means.

A diffusion part 37 for diffusion of assembly fluid is provided. The diffusion part 27 is generally of annular shape, corresponding to the cylindrical outer shape of the first and second connection ends 211, 221. Of course, this is not limiting and other forms are possible, to conform to the first and second connection ends 211, 221.

The diffusion part 37 is preferably of inverted U shape in cross section, and adapted to be placed on the pipe with the U shape in cross section along a plane passing through the main axis of the pipe. The diffusion part 37 comprises an inner wing 38, a radial body 39 and an outer wing 310. As shown on figure 14, the inner wing 38 is shorter than the outer wing 310.

The inner wing 38 is adapted to be braced against the first pipe element 31 inserted into the second pipe element 32. More precisely, in this embodiment, the inner wing 38 has an inner surface 381 in contact with the first pipe element 31, an inner surface 382 and an end face 383 adapted to abut against the free edge 35 of the socket 33.

A circumferential channel 314 can be formed in the diffusion part 37 when the diffusion part is in place, the circumferential channel 314 being located between the free edge 35 of the socket 33, the radial body 39, the inner wing 38 and the outer wing 310.

The end face 383 comprises a plurality of secondary channels 3110, serving for the deflection of the assembly fluid. As shown on figure 14, the secondary channels 3110 are radial and extend between a first channel end 3111 on the outer surface side and a second channel end 3112 on the inner surface side of the inner wing 38..

The length of the secondary channels 3110 correspond to the width of the inner wing 38. The secondary channels 3110 are aimed at deflecting the assembly fluid from the circumferential channel 314, to allow the transmission of the assembly fluid into the connection space 12 between the socket and the first tube element.

The circumferential channel 314 defines a space, which can be filled with assembly fluid injected into said diffusion part 37. This circumferential channel 314 communicates with the one or more secondary channels 311 formed in the inner wing 38. The circumferential channel 314 is adapted to act as a fluid collector or intermediary chamber for the diffusion of the assembly fluid in the different channels 3110. Preferably, the circumferential channel 314 is wider than the secondary channels 3110, allowing the circumferential channel 314 to be filled with assembly fluid first, and then the diffusion of the assembly fluid in the secondary channels 3110, and ultimately into the connection space between the socket and the first element.

The diffusion part 37 comprises one or more openings 313 for the injection of assembly fluid. The reservoir of assembly fluid 16 as shown on figure 6 can be used to inject the assembly fluid.

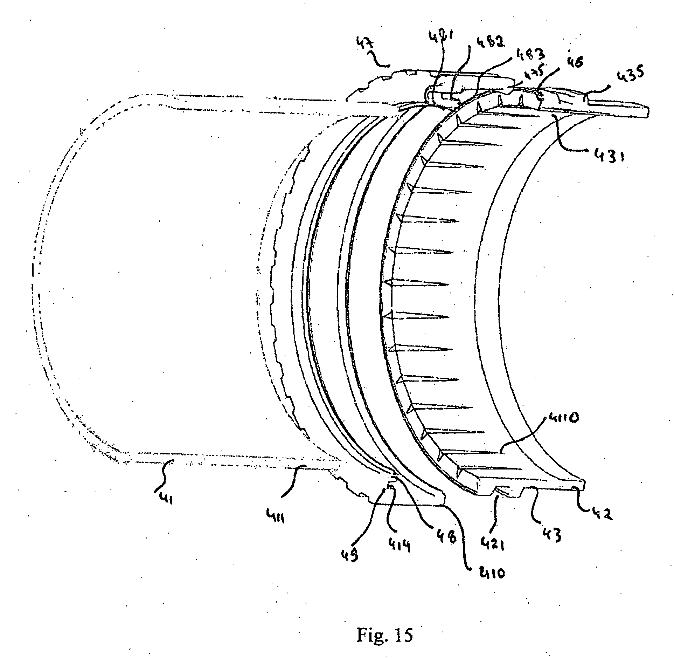

Figure 15 show yet another pipe connection according to yet another embodiment of the present invention. The pipe connection of figure 15 mainly differs from the pipe connection of figure 14 in that the secondary diffusion channels are located on the socket instead of the diffusion part.

The pipe connection of figure 15 comprises a first pipe element 41 adapted to be inserted into a second pipe element 42. The first pipe element 41 has a first connection end 411. The second pipe element 42 has a second connection end 421. Preferably, the first and second connection ends 411, 421 are cylindrical. Of course, this is not limiting and other forms are possible, such as circular, polygon shaped.

The second connection end 421 has a socket 43, which can be integrally formed as a one-diffusion part unitary member. Alternately, the second pipe element 42 and the second connection end 421 can be two distinct elements connected together, e.g.by gluing, welding, clipping or any other connection means.

A diffusion part 47 for diffusion of assembly fluid is provided. The diffusion part 47 is generally of annular shape, corresponding to the cylindrical outer shape of the first and second connection ends 411, 421. Of course, this is not limiting and other forms are possible, to conform to the first and second connection ends 411, 421.

The diffusion part 47 is preferably of inverted U shape in cross section, and adapted to be placed on the pipe with the U shape in cross section along a plane passing through the main axis of the pipe. The diffusion part 47 comprises an inner wing 48, a radial body 49 and an outer wing 410.

The inner wing 48 is adapted to be braced against the first pipe element 41 inserted into the second pipe element 42. More precisely, in this embodiment, the inner wing 48 has an inner surface 481 in contact with the first pipe element 41, an outer surface 482 and an end face 483 adapted to abut against the free edge 45 of the socket 43 when the diffusion part and the socket are assembled.

A circumferential channel 414 can be formed in the diffusion part 47, the circumferential channel 414 being located between the radial body 49, the inner wing 48 and the outer wing 410, and the end face 46 of the socket 43, when the diffusion part 47 is in place.

The socket 43 comprises a plurality of secondary channels 4110, serving for the deflection of the assembly fluid. As shown on figure 15, the secondary channels 4110 extend radially in the end face 46 of the socket 43 and axially on the inner surface 431 adapted to face the first element when the first element is inserted into the socket. Although the secondary diffusion channels 4110 are extending both radially and axially on figure 15, the secondary diffusion channels may extend radially or axially only.

The circumferential channel 414 defines a space, which can be filled with assembly fluid injected into said diffusion part 47. This circumferential channel 414 communicates with the secondary channels 4110 formed in the socket. The circumferential channel 414 is adapted to act as a fluid collector or intermediary chamber for the diffusion of the assembly fluid in the different channels 4110.

Preferably, the circumferential channel 414 is wider than the secondary channels 4110, allowing the circumferential channel 314 to be filled with assembly fluid first, and then the diffusion of the assembly fluid in the secondary channels 311, and ultimately into the connection space between the socket and the first element.

The diffusion part 47 comprises one or more openings 413 for the injection of assembly fluid. The reservoir of assembly fluid 16 as shown on figure 6 can be used to inject the assembly fluid.

It should be clear from the above description that the secondary diffusion channels may be radial and/or axial, as long as the secondary diffusion channels allow directing of the assembly fluid from the circumferential channel to the connection space between the socket and the first element.

Figure 16 shows elements of a pipe connection according to the present disclosure. The pipe connection of figure 16 mainly differs from the pipe connection as shown on figures 1 and 12 by the orientation of the secondary channels. The pipe connection of figure 16 comprises a first pipe element 51 adapted to be inserted into a second pipe element 52. The first pipe element 51 has a first connection end 511. The second pipe element 52 has a second connection end 521. The second connection end 521 has a socket 53. The second pipe element 52 and the second connection end with the socket 53 can be integrally formed as a one-diffusion part unitary member. Alternately, the second pipe element 52 with the socket 53 can be two distinct elements connected together, e.g.by gluing, welding, clipping or any other connection means.

A diffusion part 57 for diffusion of assembly fluid is provided. The diffusion part 57 is generally of annular shape, corresponding to the cylindrical outer shape of the first and second connection ends 511, 521. Of course, this is not limiting and other forms are possible, to conform to the first and second connection ends.

The diffusion part 57 is preferably of inverted U shape in cross section, and adapted to be placed on the pipe with the U shape in cross section along a plane passing through the main axis of the pipe. The diffusion part 57 comprises an inner wing 58, a radial body 59 and an outer wing 510. As shown on figure 16, the length of the inner wing 58 is mainly the same as the length of the outer wing 510. This is not limiting and the inner and outer wing can have varying lengths.

The inner wing 58 is adapted to be braced against the first pipe element 51 inserted into the second pipe element 52. More precisely, the inner wing 58 has an inner surface 581 adapted to be in contact with the first pipe element 51, an inner surface 582 for receiving the socket 53.

A circumferential channel 514 can be formed in the diffusion part 57 when the diffusion part is in place, the circumferential channel 514 being located between the free edge 55 of the socket 53, the radial body 59, the inner wing 58 and the outer wing 510.

The inner surface 581 comprises a plurality of secondary channels 5110, serving for the deflection of the assembly fluid. As shown on figure 16, the secondary channels 5110 have an axial component and extend partly circumferentially, similarly to a thread. The secondary channels 5110 are aimed at deflecting the assembly fluid from the circumferential channel 514, to allow the transmission of the assembly fluid into the connection space between the socket and the first tube element.

The circumferential channel 514 defines a space, which can be filled with assembly fluid injected into said diffusion part 57. This circumferential channel 514 communicates with the one or more secondary channels 5110 formed in the inner wing 58. The circumferential channel 514 is adapted to act as a fluid collector or intermediary chamber for the diffusion of the assembly fluid in the different channels 5110. Preferably, the circumferential channel 514 is wider than the secondary channels 5110..

The diffusion part 57 comprises one or more openings 513 for the injection of assembly fluid. The reservoir of assembly fluid 16 as shown on figure 6 can be used to inject the assembly fluid.

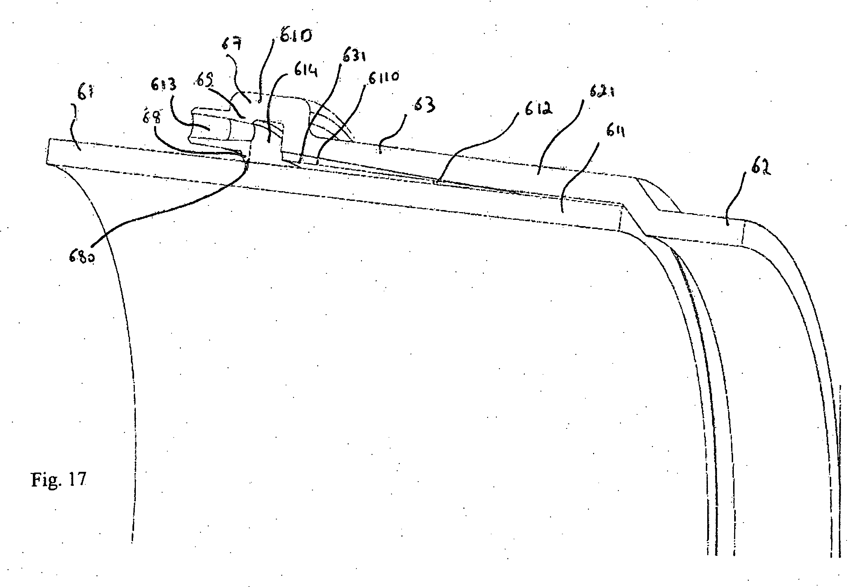

Figure 17 show yet another elements of a pipe connection, when assembled, according to yet another embodiment of the present invention. The pipe connection of figure 17 mainly differs from the pipe connection of figures 1-15 in that the socket and the diffusion part are integrally formed as a one part member.

The pipe connection of figure 17 comprises a first pipe element 61 inserted into a second pipe element 62. The first pipe element 61 has a first connection end 611. The second pipe element 62 has a second connection end 621. Preferably, the first and second connection ends 611, 621 are cylindrical. Of course, this is not limiting and other forms are possible, such as circular, polygon shaped.

The second connection end 621 has a socket 63, provided at a free end with a diffusion part 67 for diffusion of assembly. The diffusion part 67 defines a circumferential channel 614 located between a, radial body 69, an inner wing 68 and the outer wing 610, and the end face of the socket 43. In the embodiment of figure 16, the inner wing 68 is shorter than the outer wing 610, but this is not limiting. Further, the inner wing 68 is also provided with a gasket lip 680, preventing the assembly fluid from leaking out of the connection during injection.

The socket 63 comprises a plurality of secondary channels 6110, serving for the deflection of the assembly fluid. As shown on figure 16, the secondary channels 6110 extend radially and axially on the inner surface 631 facing the first element inserted into the socket.

The circumferential channel 614 defines a space, which can be filled with assembly fluid injected into said diffusion part 67. This circumferential channel 614 communicates with the secondary channels 6110 formed in the socket. The circumferential channel 614 is wider than the secondary channels 6110 and is adapted to act as a fluid collector or intermediary chamber for the diffusion of the assembly fluid in the different channels 6110 and then into the connection space 612 between the socket and the first pipe element.

The diffusion part 67 comprises one or more openings 613 for the injection of assembly fluid. The reservoir of assembly fluid 16 as shown on figure 6 can be used to inject the assembly fluid.

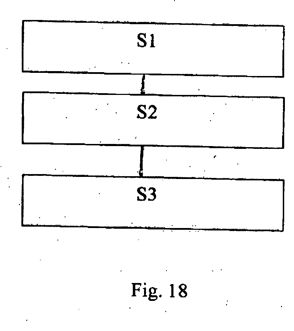

Figure 18 shows a method of connection of two pipe elements according to one aspect of the present invention, which can be used to connect two pipe elements for transport of liquid or gaseous fluid. The method of connection will be described in conjunction with pipe elements of figures 12-13.

In a first step S1, the diffusion part is placed on the edge 25 of the socket 23 of the second pipe element 22. The good positioning of the diffusion part may be ensured by the radial stop elements on the periphery of the socket 23. The diffusion part may be clipped on the socket, wherein clips may be provided on the socket and/or the diffusion part.

In a second step S2, the end of the first pipe element 21 is inserted into the set formed by said socket 23 and the diffusion part 27. The length of insertion of the first pipe element 21 into the second pipe element 22 may be defined by the length of the socket 23 and the first pipe element is inserted until coming into abutment against the collar 24. A space 212, referred to as the connection space, is formed between the socket 23 and the outer surface of the first pipe element 21 inserted into the second pipe element. The space 212 is adapted to receive assembly fluid for the firm connection of the two pipe elements 21, 22.

Alternately, the first pipe element 21 may be inserted into the diffusion part 27 first. The end of the first pipe element is thereafter inserted into the socket 23 and the diffusion part 27. The length of insertion of the first pipe element 21 into the second pipe element 22 may be defined by the length of the socket 23. The diffusion part 27 can then be braced against the edge of the socket of the second pipe element by sliding said diffusion part onto the first pipe element until the diffusion part 27 receives the edge 25 of the socket 23.

In a third step S3, once the pipe elements 21, 22 and the diffusion part 27 are in place, the assembly fluid is injected into the diffusion part 27, through the injection opening 213. The reservoir of assembly fluid 16 as shown on figure 6 can be used to inject the assembly fluid. The reservoir 16 has a flexible connection tube 17 provided with a feed nozzle 18, able to cooperate with the opening 213 of the diffusion part 27 to ensure the feeding of assembly fluid to the circumferential channel 214. As a variant, the opening 23 of the diffusion part 27 can be arranged to cooperate directly with the flexible tube 17.

During injection, the assembly fluid is first collected and distributed in the circumferential channel 214, around the first pipe element 21. When the circumferential channel 214 is full, the assembly fluid diffuses into the axial channels 211 leading to the space between said first pipe element 21 and the socket 23. The axial channels 2110 ensure a uniform axial diffusion of the assembly fluid in the axial direction and into said connection space 212.

Preferably, after completing the connection, the diffusion part for diffusion of assembly fluid is removed.

## Claims

1. Device for connection, by means of an injected assembly fluid, of a first pipe element (1; 21) and a second pipe element (2; 22) for transport of liquid or gaseous fluid, the second element (2; 22) having a socket (3; 23) receiving an end of the first element, comprising:
a diffusion part (7;27) for diffusion of the injected assembly fluid, the diffusion part (7; 27) being adapted to be arranged on a circumference of the first element (1; 21) and against an edge (5; 25) of the socket (3; 23), said diffusion part having at least one opening (13; 213) for the injection of assembly fluid into said diffusion part (7; 27)
the diffusion part (7; 27), in operative position, forming a chamber for collecting said assembly fluid and for distributing it circumferentially,
**characterized by** the diffusion part forming a circumferential channel (14; 214), the device comprising directing means allowing to actively direct the assembly fluid towards a connection space (12) formed between the socket and the outer surface of the first element, the directing means comprising at least one secondary diffusion channel (11; 2110) extending at least partly axially between said circumferential channel (14, 214) and said connection space (12; 212), wherein the at least one secondary channel provides for axial displacement of the assembly fluid, the circumferential channel distributing the assembly fluid into the at least one secondary diffusion channel.

2. Device according to claim 1, wherein the directing means comprises a tilted and/or curved deflector surface adapted to introduce an axial speed vector in the circumferentially flowing assembly fluid.

3. Device according to claim 1 or 2, comprising a plurality of secondary diffusion channels of variable shape and distribution about the diffusion part (7) in order to distribute homogenously the injected fluid by making up or increasing the head losses of the injected fluid..

4. Device according to any one of claims 1 to 3, wherein the circumferential channel (14; 214) is wider than the at least one secondary diffusion channel (11; 2110).

5. Device according to any one of claims 1 to 4, wherein the diffusion part (7) is mainly U shaped with an inner wing (8; 28), a radial body (9; 29) and an outer wing (10; 210), the diffusion part (7;27) being adapted to be placed on the pipe with the inner wing (8; 28) lying against the first element (1; 21), and wherein the circumferential channel (14; 214) is formed between the inner wing, the radial body and the outer wing.

6. Device according to claim 5, wherein the inner wing (8; 28) comprises an inner surface adapted to receive the socket (3; 23) and/or an end face adapted to abut against the socket (3; 23).

7. Device according to claim 5 or 6, wherein a length of the at least one secondary channel mainly corresponds to a length of the inner wing.

8. Device according to claim 5 or 6, wherein a length of the at least one axial channel is smaller than a length of the inner wing.

9. Device according to any one of claims 1 to 8, wherein the at least one secondary diffusion channel provides for radial displacement of the assembly fluid, in particular said at least one secondary channel is at least partly oriented in the radial direction.

10. Device according to any one of the preceding claims 5 to 8 and 9 when dependent from claim 5, wherein the at least one secondary diffusion channel is located on the inner wing (8; 28) of the diffusion part (7; 27).

11. Device according to any one of the preceding claims 5 to 8 and 9 to 10 when dependent from claim 5, comprising said socket (3; 23), and wherein the at least one secondary diffusion channel is located on the inner wing (8; 28) of the diffusion part (7).

12. Device according to any one of claims 7 to 8 and 9 to 11 when dependent from claim 5, wherein the inner wing (8; 28) is shorter than the outer wing (10; 210), and wherein the socket is adapted to abut against the end face of the inner wing facing the socket.

13. Device according to claim 1, **characterized in that** the diffusion part (7) comprises an open ring.

14. Device according to claim 1, **characterized in that** the socket (3; 23) receiving the end of the first element is of conical shape.

15. Device according to anyone of claims 1 to 14, wherein the diffusion part (7) for diffusion of assembly fluid comprises two parts (7, 7').

16. Device according to anyone of claims 1 to 15, wherein the diffusion part is integrally formed with the socket.

17. Device according to any one of claims 1 to 16, comprising a reservoir (16) of assembly fluid to be injected into the space (12) between the end of the first pipe element (1) and the socket (3) of the second pipe element (2).

18. Method of connection, by means of an injected assembly fluid, of a first and a second pipe element for transport of liquid or gaseous fluid, the second element (2; 22) comprising a socket (3; 23), **characterized by** the steps of:
a. assembling a diffusion part (7; 27) for diffusion of assembly fluid, the first pipe element and the second pipe element, such that, when assembled, the diffusion part (7; 27) lays around the first element (1; 21) and on the edge (5; 25) of the socket (3; 23) of the second pipe element, the first element being inserted into the socket (3; 23); the diffusion part being arranged on a circumference of the first element (1; 21) and against an edge (5; 25) of the socket (3; 23), said diffusion part having at least one opening (13; 213) for the injection of assembly fluid into said diffusion part (7; 27)
the diffusion part (7; 27) forming a chamber for collecting said assembly fluid and for distributing it circumferentially,
b. injecting the assembly fluid into the diffusion part (7), so as to ensure the distribution of the assembly fluid in the diffusion part (7) around the first pipe element (1),
c. pressurizing the injected assembly fluid,
d. curing the assembly fluid,
wherein at least one among steps c and d comprises actively directing the assembly fluid towards a connection space (12) between the socket and the first element, wherein the steps of actively directing the assembly fluid towards a connection space (12) between the socket and outer surface of the the first element comprises the step of filling a circumferential channel formed within the diffusion part with the assembly fluid and distributing the assembly fluid from the circumferential channel into at the least one secondary diffusion channel extending at least partly axially between said circumferential channel (14, 214) and said connection space (12; 212), wherein the at least one secondary channel provides for axial displacement of the assembly fluid.

19. Method of connection according to claim 18, **characterized in that**, after producing the connection, the diffusion part is removed.

20. Method of connection according to any one of claims 18 to 19, using a device according to anyone of claims 1 to 17.

21. Use of a device according to claims 1 to 17 for connection a first pipe element and a second pipe element.

22. Connection obtained by applying a method according to anyone of claims 18 to 21 and/or using a device according to anyone of claims 1 to 17.

## Patentansprüche

1. Vorrichtung zum Verbinden, vermittels eines eingespritzten Montagefluides, eines ersten Rohrelementes (1; 21) und eines zweiten Rohrelementes (2; 22) zum Transport von flüssigem oder gasförmigem Fluid, wobei das zweite Elemente (2; 22) über einen Sockel (3; 23) verfügt, der ein Ende des ersten Elementes aufnimmt, umfassend:
einen Diffusionspart (7; 27) zur Diffusion des eingespritzten Montagefluides, wobei der Diffusionspart (7; 27) ausgelegt ist, um an einem Umfang des ersten Elementes (1; 21) und gegen eine Kante (5; 25) des Sockels (3; 23) angeordnet zu werden, wobei der Diffusionspart zumindest eine Öffnung (13; 213) für das Einspritzen des Montagefluides in den Diffusionspart (7; 27) aufweist,
wobei der Diffusionspart (7; 27), in operativer Position, eine Kammer zum Sammeln des Montagefluides und zu dessen umfänglicher Verteilung ausbildet,
**gekennzeichnet dadurch, dass** der Diffusionspart einen umfänglichen Kanal (14; 214) ausbildet, wobei die Vorrichtung Leitmittel umfasst, die es ermöglichen, aktiv das Montagefluid hin zu einem Verbindungs- oder Anschlussraum zu leiten oder zu richten, gebildet zwischen dem Sockel und der Außenfläche des ersten Elementes, wobei die Leitmittel zumindest einen Sekundärdiffusionskanal (11; 2110) umfassen, sich erstreckend zumindest teilweise axial zwischen dem umfänglichen Kanal (14; 214) und dem Verbindungs- oder Anschlussraum (12; 212), wobei der zumindest eine Sekundärkanal Axialversetzung des Montagefluides bereitstellt, wobei der umfängliche Kanal das Montagefluid in den zumindest einen Sekundärdiffusionskanal verteilt.

2. Vorrichtung nach Anspruch 1, bei welcher die Leitmittel eine schrägstehende und/oder gekrümmte Deflektorfläche umfassen, ausgelegt zum Bewirken eines Axialgeschwindigkeitsvektors in dem umfänglich fließenden Montagefluid.

3. Vorrichtung nach Anspruch 1 oder 2, umfassend eine Vielzahl von Sekundärdiffusionskanälen von variabler Form und Verteilung bezüglich dem Diffusionspart (7), um das Montagefluid homogen unter Ausbildung oder Erhöhung des Druckverlustes des eingespritzten Fluides zu verteilen.

4. Vorrichtung nach einem der Ansprüche 1 bis 3, bei welcher der umfängliche Kanal (14; 214) breiter als der zumindest eine sekundäre Diffusionskanal (11; 2110) ist.

5. Vorrichtung nach einem der Ansprüche 1 bis 4, bei welcher der Diffusionspart (7) maßgeblich U-förmig mit einem inneren Schenkel (8; 28), einem Radialkörper (9; 29) und einem äußeren Schenkel (10; 210) ist, wobei der Diffusionspart (7; 27) ausgelegt ist, um an dem Rohr mit dem inneren Schenkel (8; 28) anliegend gegen das erste Element (1; 21) angeordnet zu werden, und wobei der umfängliche Kanal (14; 214) zwischen dem inneren Schenkel, dem Radialkörper und dem äußeren Schenkel ausgebildet ist/wird.

6. Vorrichtung nach Anspruch 5, bei welcher der innere Schenkel (8; 28) eine Innenfläche enthält, ausgelegt zum Empfangen des Sockels (3; 23) und/oder eine Endfläche, ausgelegt zum Anliegen gegen den Sockel (3; 23).

7. Vorrichtung nach Anspruch 5 oder 6, bei welcher eine Länge des zumindest einen Sekundärkanales im Wesentlichen einer Länge des Innenschenkels entspricht.

8. Vorrichtung nach Anspruch 5 oder 6, bei welcher eine Länge des zumindest einen axialen Kanals geringer ist als eine Länge des inneren Schenkels.

9. Vorrichtung nach einem der Ansprüche 1 bis 8, bei welcher der zumindest eine sekundäre Diffusionskanal eine radiale Versetzung des Montagefluids bereitstellt, insbesondere der zumindest eine Sekundärkanal zumindest teilweise in der radialen Richtung ausgerichtet ist.

10. Vorrichtung nach einem der vorangegangenen Ansprüche 5 bis 8 und 9, wenn abhängig von Anspruch 5, wobei der zumindest eine Sekundärdiffusionskanal angeordnet oder befindlich an dem inneren Schenkel (8; 28) des Diffusionsparts (7; 27) ist.

11. Vorrichtung nach einem der vorangegangenen Ansprüche 5 bis 8 und 9 bis 10, wenn abhängig von Anspruch 5, umfassend den Sockel (3; 23) und bei welcher der zumindest eine Sekundärdiffusionskanal angeordnet oder befindlich an dem inneren Schenkel (8; 28) des Diffusionspart (7) ist.

12. Vorrichtung nach einem der Ansprüche 7 bis 8 und 9 bis 11, wenn abhängig von Anspruch 5, wobei der innere Schenkel (8; 28) kürzer als der äußere Schenkel (10; 210) ist und bei welcher der Sockel zum Anschlagen oder Anliegen gegen die Endfläche des dem Sockel gegenüberstehenden inneren Schenkels ausgelegt ist.

13. Vorrichtung nach Anspruch 1, **dadurch gekennzeichnet, dass** der Diffusionspart (7) einen offenen Ring umfasst.

14. Vorrichtung nach Anspruch 1, **dadurch gekennzeichnet, dass** der Sockel (3; 23), der das Ende des ersten Elementes aufnimmt oder empfängt, von konischer Form ist.

15. Vorrichtung nach einem der Ansprüche 1 bis 14, bei welchem der Diffusionspart (7) zur Diffusion von Montagefluid zwei Parts (7; 7') umfasst.

16. Vorrichtung nach einem der Ansprüche 1 bis 15, bei welchem der Diffusionspart integral mit dem Sockel ausgebildet ist.

17. Vorrichtung nach einem der Ansprüche 1 bis 16, umfassend ein Reservoir (16) eines Montagefluid zum Einspritzen in den Raum (12) zwischen dem Ende des ersten Rohrelementes (1) und dem Sockel (3) des zweiten Rohrelementes (2).

18. Verfahren des Verbindens, vermittels eines eingespritzten Montagefluides, von einem ersten und einem zweiten Rohrelement zum Transport von flüssigem oder gasförmigem Fluid, wobei das zweite Element (2; 22) einen Sockel (3; 23) umfasst, **gekennzeichnet durch** die Schritte von:
a. Montieren eines Diffusionsparts (7; 27) zur Diffusion von Montagefluid, des ersten Rohrelementes und des zweiten Rohrelementes, derart, dass wenn montiert der Diffusionspart (7; 27) herum um das erste Element (1; 21) und an der Kante (5; 25) des Sockels (3; 23) des zweiten Rohrelementes angeordnet ist, wobei das erste Element in den Sockel (3; 23) eingeführt ist; wobei der Diffusionspart an einem Umfang des ersten Elementes (1; 21) und gegen eine Kante (5; 25) des Sockels (3; 23) angeordnet ist, wobei der Diffusionspart zumindest eine Öffnung (13; 213) zum Einspritzen von Montagefluid in den Diffusionspart (7; 27) aufweist, wobei der Montagepart (7; 27) eine Kammer zum Sammeln des Montagefluides und zu dessen umfänglicher Verteilung ausbildet,
b. Einspritzen des Montagefluides in den Diffusionspart (7), so dass gewährleistet ist/wird, dass eine Verteilung des Montagefluides in dem Diffusionspart (7) herum um das erste Rohrelement (1) erfolgt,
c. Druckbeaufschlagen des eingespritzten Montagefluides,
d. Aushärten des Montagefluides,
wobei zumindest eine unter den Schritten c) und d) aktives Leiten oder Richten des Montagefluides hin zu einem Verbindungs- oder Anschlussraum (12) zwischen dem Sockel und dem ersten Element umfasst,
wobei die Schritte des aktiven Leitens oder Richtens des Montagefluides hin zu einem Verbindungs- oder Anschlussraum (12) zwischen dem Sockel und der äußeren Fläche des ersten Elementes den Schritt das Füllens eines umfänglichen Kanales mit Montagefluid, der innerhalb des Diffusionsparts ausgebildet ist und das Leiten oder Richten des Montagefluides von dem umfänglichen Kanal in den zumindest einen sekundären Diffusionskanal umfasst, sich erstreckend zumindest teilweise axialwärts zwischen dem umfänglichen Kanal (14; 214) und dem Verbindungs- oder Anschlussraum (12, 212), wobei der zumindest eine sekundäre Kanal Axialversetzung des Montagefluides bewirkt oder bereitstellt.

19. Verfahren des Verbindens gemäß Anspruch 18, **dadurch gekennzeichnet, dass** der Diffusionspart nach dem Erzeugen der Verbindung oder des Anschlusses entfernt ist/wird.

20. Verfahren des Verbindens nach einem der Ansprüche 18 bis 19, unter Verwendung einer Vorrichtung gemäß einem der Ansprüche 1 bis 17.

21. Verwendung einer Vorrichtung gemäß den Ansprüchen 1 bis 17 zur Verbindung eines ersten Rohrelementes und eines zweiten Rohrelementes.

22. Verbindung, erhalten durch anwenden eines Verfahrens gemäß einem der Ansprüche 18 bis 21 und/oder unter Verwendung einer Vorrichtung gemäß einem der Ansprüche 1 bis 17.

## Revendications

1. Dispositif de connexion, au moyen d'un fluide d'assemblage injecté, d'un premier élément de tuyau (1; 21) et d'un deuxième élément de tuyau (2; 22) pour le transport de fluide liquide ou gazeux, le deuxième élément (2; 22) ayant une emboiture (3, 23) recevant une extrémité du premier élément, comprenant:
une pièce de diffusion (7 ; 27) pour la diffusion du fluide d'assemblage injecté, la pièce de diffusion (7 ; 27) étant adaptée pour être agencée sur une circonférence du premier élément (1 ; 21) et contre un bord (5 ; 25) de l'emboiture (3 ; 23), la pièce de diffusion ayant au moins une ouverture (13 ; 213) pour l'injection de fluide d'assemblage dans la pièce de diffusion (7 ; 27),
la pièce de diffusion (7 ; 27), en position fonctionnelle, formant une cavité pour collecter ledit fluide d'assemblage et pour le distribuer de manière circonférentielle,
**caractérisé par** la pièce de diffusion formant un canal circonférentiel (14 ; 214), le dispositif comprenant des moyens de direction permettant de diriger activement le fluide d'assemblage vers un espace de connexion (12) formé entre l'emboiture et la surface externe du premier élément, les moyens de direction comprenant au moins un deuxième canal de diffusion secondaire (11 ; 2110) s'étendant au moins partiellement axialement entre le canal circonférentiel (94 ; 214) et l'espace de connexion (12 ; 212), dans lequel ledit au moins un canal secondaire fournit le déplacement axial du fluide d'assemblage, le canal circonférentiel distribuant le fluide d'assemblage dans le au moins un canal de diffusion secondaire.

2. Dispositif selon la revendication 1, dans lequel les moyens de direction comprennent une surface déflectrice incurvée et/ou inclinée, adaptée pour introduire un vecteur de vitesse axial(e) dans le fluide d'assemblage s'écoulant de manière circonférentielle.

3. Dispositif selon la revendication 1 ou 2, comprenant une pluralité de canaux de diffusions secondaires de forme variable et de distribution variable par rapport à la pièce de diffusion (7) afin de distribuer de manière homogène le fluide injecté en augmentant ou en diminuant les pertes de charge du fluide injecté.

4. Dispositif selon l'une quelconque des revendications 1 à 3, dans lequel le canal circonférentiel (14 ; 214) est plus large que le au moins un canal de diffusion secondaire (11 ; 2110).

5. Dispositif selon l'une quelconque des revendications 1 à 4, dans lequel la pièce de diffusion (7) est sensiblement en forme de U avec une aile interne (8 ; 28), un corps radial (9 ; 29) et une aile externe (10 ; 210), la pièce de diffusion (7 ; 27) étant adaptée pour être placée sur le tuyau avec le l'aile interne (8 ; 28) reposant contre le premier élément (1 ; 21), et dans lequel le canal circonférentiel (14 ; 214) est formé entre l'aile interne, le corps radial et l'aile externe.

6. Dispositif selon la revendication 5, dans lequel l'aile interne (8 ; 28) comprend une surface interne adaptée pour recevoir l'emboiture (3 ; 23) et/ou une face d'extrémité adaptée pour être en butée contre l'emboiture (3 ; 23).

7. Dispositif selon la revendication 5 ou 6, dans lequel une longueur du au moins un canal secondaire correspond sensiblement à une longueur de l'aile interne.

8. Dispositif selon la revendication 5 ou 6, dans lequel une longueur du au moins un canal axial est inférieure à une longueur de l'aile interne.

9. Dispositif selon l'une quelconque des revendications 1 à 8, dans lequel le au moins un canal de diffusion secondaire fournit le déplacement radial du fluide d'assemblage, en particulier ledit un canal secondaire est au moins partiellement orienté dans la direction radiale.

10. Dispositif selon l'une quelconque des revendications 5 à 8, et 9 lorsque dépendante de la revendication 5, dans lequel le au moins un canal de diffusion secondaire est situé sur l'aile interne (8 ; 28) de la pièce de diffusion (7 ; 27).

11. Dispositif selon l'une quelconque des revendications 5 à 8, et 9 à 10 lorsque dépendantes de la revendication 5, comprenant l'emboiture (3 ; 23), et dans lequel le au moins un canal de diffusion secondaire est situé sur l'aile interne (8 ; 28) de la pièce de diffusion (7).

12. Dispositif selon l'une quelconque des revendications 7 à 8, et 9 à 11 lorsque dépendantes de la revendication 5, dans lequel l'aile interne (8 ; 28) est plus courte que l'aile externe (10 ; 210), et dans lequel l'emboiture est adaptée pour être en butée contre la face d'extrémité de l'aile interne faisant face à l'emboiture.

13. Dispositif selon la revendication 1, **caractérisé en ce que** la pièce de diffusion (7) comprend une bague ouverte.

14. Dispositif selon la revendication 1, **caractérisé en ce que** l'emboiture (3 ; 23) recevant l'extrémité du premier élément est de forme conique.

15. Dispositif selon l'une quelconque des revendications 1 à 14, dans lequel la pièce de diffusion (7) pour diffusion du fluide d'assemblage comprend deux parties (7 ; 7").

16. Dispositif selon l'une quelconque des revendications 1 à 15, dans lequel la pièce de diffusion est formée intégralement avec l'emboiture.

17. Dispositif selon l'une quelconque des revendications 1 à 16, comprenant un réservoir (16) de fluide d'assemblage à injecter dans l'espace (12) entre l'extrémité du premier élément de tuyau (1) et l'emboiture (3) du deuxième élément de tuyau (2).

18. Procédé de connexion, au moyen d'un fluide d'assemblage injecté, d'un premier et d'un deuxième élément de tuyau pour transport de fluide liquide ou gazeux, le deuxième élément (2 ; 22) comprenant une emboiture (3 ; 23), **caractérisé par** les étapes suivantes :
a) Assembler une pièce de diffusion (7 ; 27) pour diffusion de fluide d'assemblage, le premier élément de tuyau et le deuxième élément de tuyau, de sorte que, lorsqu'assemblés, la pièce de diffusion (7 ; 27) se trouve contre le premier élément (1 ; 21) et sur le bord (5 ; 25) de l'emboiture (3 ; 23) du deuxième élément de tuyau, le premier élément étant inséré dans l'emboiture (3 ; 23) ; la pièce de diffusion étant agencée sur une circonférence du premier élément (1 ; 21) et contre un bord (5 ; 25) de l'emboiture (3 ; 23), la partie du diffusion ayant au moins une ouverture (13 ; 213) pour l'injection de fluide d'assemblage dans la pièce de diffusion (7 ; 27), la pièce du diffusion (7 ; 27) formant une cavité pour collecter le fluide d'assemblage et pour le distribuer de manière circonférentielle,
b) injecter le fluide d'assemblage dans la pièce de diffusion (7), de sorte d'assurer la distribution du fluide d'assemblage dans la pièce de diffusion (7) autour du premier élément de tuyau (1),
c) mettre sous pression du fluide d'assemblage injecté,
d) durcir le fluide d'assemblage,
dans lequel au moins l'une des étapes c et d comprend l'étape de diriger activement le fluide d'assemblage vers un espace de connexion (12) entre l'emboiture et le premier élément,
dans lequel les étapes de diriger activement le fluide d'assemblage vers un espace de connexion (12) entre l'emboiture et la surface externe du premier élément comprend l'étape de remplissage d'un canal circonférentiel formé à l'intérieur de la pièce de diffusion avec le fluide d'assemblage et la distribution du fluide d'assemblage depuis le canal circonférentiel vers au moins un canal de diffusion secondaire s'étendant au moins partiellement axialement entre le canal circonférentiel (14, 214) et l'espace de connexion (12 ; 212), dans lequel au moins un canal secondaire fournit un déplacement axial du fluide d'assemblage.

19. Procédé de connexion selon la revendication 18, **caractérisé en ce que** la pièce de diffusion est retirée une fois la connexion réalisée.

20. Procédé de connexion selon l'une quelconque des revendications 18 à 19, à l'aide d'un dispositif selon l'une quelconque des revendications 1 à 17.

21. Utilisation d'un dispositif selon les revendications 1 à 17 pour connecter un premier élément de tuyau et un deuxième élément de tuyau.

22. Connexion obtenue en appliquant un procédé selon l'une quelconque des revendications 18 à 21 et/ou en utilisant un dispositif selon l'une quelconque des revendications 1 à 17.
